# FASCICULE DE BREVET EUROPEEN

(11) **EP 4 262 348 B1**
(45) Date de publication et mention de la délivrance du brevet: **18.09.2024**
(21) Numéro de dépôt: 21836090.7
(22) Date de dépôt: 08.12.2021
(51) Int. Cl.: A01C 9/02, A01C 9/04, A01C 15/00

(54) **MACHINE POUR LA PLANTATION DE BULBES DANS UNE POSITION PREDETERMINEE**
MASCHINE ZUM PFLANZEN VON ZWIEBELN IN EINER VORBESTIMMTEN POSITION
MACHINE FOR PLANTING BULBS IN A PREDETERMINED POSITION

(30) Priorité: 17.12.2020 FR 2013492
(43) Date de publication de la demande: 25.10.2023
(73) Titulaire: Seraap, 85130 Chanverrie (FR)
(72) Inventeur: BENETEAU, Jérémy, 85510 Le Boupère (FR); MENANTEAU, Louis, 85110 Chantonnay (FR)
(74) Mandataire: Lequien, Philippe
(86) Numéro de dépôt international: PCT/EP2021/084835
(87) Numéro de publication internationale: WO 2022/128691

(56) Documents cités:
- DE-B1- 2 832 383
- FR-A- 1 554 607
- NL-C1- 1 005 818
- RU-C2- 2 492 615
- SU-A1- 382 372

## Description

Le domaine de l'invention est celui de la conception et de la fabrication de machines agricoles.

Plus précisément, l'invention concerne en particulier, mais non exclusivement, une machine pour la plantation de bulbes dans une position prédéterminée.

Dans le domaine agricole, la plantation de végétaux peut se faire de manière manuelle ou de manière automatisée.

Dans le cas d'une agriculture étendue, la plantation automatisée est généralement préférée puisqu'étant, dans ce cas, plus rapide et moins coûteuse que la plantation manuelle.

Pour l'agriculture au sol, et notamment dans les champs, les végétaux sont issus soit de graines semées dans la terre, soit de bulbes plantés dans la terre.

Dans le cas des graines, les semailles se font de manière rapide et peu précautionneuse.

En revanche, dans le cas des bulbes, une vigilance particulière doit être apportée à leur orientation lors de la plantation.

En effet, les bulbes comprennent classiquement un corps duquel font saillie une tête et des racines opposées à la tête.

Lors de la plantation, il faut donc veiller à ce que la tête soit orientée vers le ciel, c'est à dire les racines dans le sol, afin que la transformation du bulbe en végétal, notamment le développement de la tige, puisse se réaliser.

Pour cela, plusieurs techniques existent.

Selon une première technique, la plus répandue, les bulbes sont mis en vrac dans une trémie et déposés dans des sillons de terre de manière régulière.

Postérieurement à la dépose des bulbes dans les sillons de terre, les bulbes sont retournés pour être convenablement orientés, c'est-à-dire pour être positionnés tête vers le ciel, ou encore racines dans le sol.

Cette opération de retournement et de réorientation des bulbes est généralement réalisée de manière manuelle par des ouvriers agricoles.

Les ouvriers agricoles peuvent par exemple être positionnés couchés sur un plateau tracté par un engin agricole se déplacent le long des sillons et retourner les bulbes à mesure de l'avancée de l'engin agricole.

Selon un autre exemple, les ouvriers se déplacent à pieds le long des sillons et se baissent pour réorienter les bulbes mal orientés lors de leur dépose.

Dans chacun de ces deux exemples, les positions de travail adoptées par les ouvriers peuvent entraîner des troubles musculosquelettiques qui conduisent à un arrêt plus ou moins longue de travail et/ou à des séquelles plus ou moins importantes.

Cependant, l'opération de retournement et de réorientation des bulbes peut également être réalisée de manière automatisée par un robot ou une machine se déplaçant le long des sillons pour retourner les bulbes mal orientés.

L'utilisation d'un tel robot ou d'une telle machine s'avère compliquée pour les agriculteurs qui peuvent être amenés à sous-traiter cette tâche, notamment en raison des moyens techniques utilisés sur ces moyens mécanisés (moyens de vision, moyens d'analyse d'image, moyens mécaniques de préhension et de retournement, ...).

De plus, l'opération de retournement et de réorientation des bulbes peut être très onéreuse dans le cas d'une opération automatisée et/ou longue dans le cas d'une opération manuelle.

Selon une deuxième technique notamment utilisée dans le domaine de la plantation de jeunes pousses, les bulbes sont pré-orientés préalablement à leur dépose dans les sillons.

Pour cela, les moyens de dépose, tractés par un engin agricole, sont alimentés manuellement par un ou plusieurs ouvriers agricoles. Plus précisément, les bulbes sont positionnés un à un dans les moyens de dépose en étant préorientés afin que, après leur dépose, ils soient orientés tête vers le ciel.

Cette deuxième technique s'avère être particulièrement onéreuse et lente de mise en oeuvre.

En effet, elle requiert la présence d'un ou de plusieurs ouvriers agricoles en plus du conducteur de l'engin agricole.

Par ailleurs, la vitesse de plantation est limitée à la vitesse d'alimentation des moyens de dépose par les ouvriers agricoles puisque ces derniers doivent veiller à correctement positionner les bulbes lors de l'alimentation des moyens de dépose. Des machines pour la plantation de bulbes présentant les caractéristiques de la partie caractérisante de la revendication 1 sont connues de SU 382 372 A1 25 et par RU 2 492 615 C2.

L'invention a notamment pour objectif de palier les inconvénients de l'art antérieur.

Plus précisément, l'invention a pour objectif de proposer une machine de plantation de bulbes selon une orientation prédéterminée, de manière automatisée à partir de bulbes en vrac.

L'invention a également pour objectif de fournir une telle machine de plantation qui soit simple d'utilisation et fiable.

L'invention a en outre pour objectif de fournir une telle machine de plantation qui assure une plantation régulière des bulbes, permettant un développement optimal de végétaux à partir des bulbes plantés.

Ces objectifs, ainsi que d'autres qui apparaîtront par la suite, sont atteints grâce à l'invention qui a pour objet une machine de plantation de bulbes, chaque bulbe ayant une tête, la machine comprenant :
- une trémie de réception de bulbes en vrac, la trémie ayant un orifice de sortie des bulbes, et
- des moyens de dépose des bulbes dans un sillon de terre, la machine comprenant également des moyens d'orientation des bulbes, les moyens d'orientation des bulbes comprenant :
- un couloir, s'étendant entre l'orifice de sortie et les moyens de dépose, et
- des moyens d'entraînement des bulbes le long du couloir, le couloir étant bordé de deux parois inclinées l'une par rapport à l'autre et présentant chacune une extrémité inférieure, les extrémités inférieures des parois définissant entre elles un espace de réception de la tête des bulbes, caractérisée en ce qu'elle comprend également des moyens de préhension intercalés entre la trémie et les moyens d'orientation, les moyens de préhension comprenant :
- une pluralité de godets ;
- une courroie à laquelle sont fixés les godets ;
- une goulotte dans laquelle circule la courroie, la goulotte s'étendant le long d'une cloison de la trémie, les godets circulant, dans la trémie selon un premier sens en saisissant chacun un bulbe depuis l'orifice de sortie, puis hors de la trémie selon un second sens opposé au premier sens.

Lors de leur circulation dans le couloir, les bulbes sont en contact avec les parois inclinées. La friction des bulbes contre les parois et la gravité permettent de les réorienter pourque la tête des bulbes se retrouve située dans l'espace de réception ménagé entre les extrémités inférieures des deux parois. La friction contre les parois du couloir est notamment due au déplacement des bulbes par les moyens d'entrainement.

Ainsi, l'orientation de chaque bulbe est identique en sortie du couloir, à savoir que les bulbes sont tous, ou quasiment, orientés la tête dans l'espace entre les parois du couloir, c'est-à-dire la tête vers le sol dans lequel les bulbes sont destinés à être plantés.

Les moyens de dépose permettent de saisir tous les bulbes dans leur position en sortie du couloir et de les déposer selon une orientation souhaitée dans les sillons de terre. La pré-orientation des bulbes dans le couloir permet donc de faciliter la préhension des bulbes par les moyens de préhension puisqu'ils sont tous orientés de la même manière.

Il n'est ainsi plus nécessaire d'avoir recours à des opérateurs pour orienter ou positionner dans une position souhaitée les bulbes après la plantation.

Les bulbes sont alors directement et correctement orientés lors de la plantation, ce qui accroît la vitesse de plantation et réduit la pénibilité pour les agriculteurs ainsi que les coûts de plantation.

En outre, les bulbes sont déposés en vrac dans la trémie, ce qui permet de s'abstenir d'une étape de pré positionnement des bulbes avant la plantation, tel que cela peut être le cas dans des procédé de plantation selon l'art antérieur.

Les moyens de préhension permettent la préhension individuelle des bulbes dans la trémie lorsqu'ils sont en vrac, afin d'alimenter à une cadence prédéterminée les moyens d'orientation.

La pluralité de godets permet de saisir les bulbes dans la trémie et de les faire remonter le long d'une paroi de la trémie selon le premier sens puis de les déposer chacun dans le couloir des moyens d'orientation en les faisant circuler le long de la même paroi de la trémie selon le second sens.

En outre, la goulotte permet d'éviter que les bulbes ne s'échappent des moyens de préhension, notamment lorsque la machine est déplacée dans un champ et qu'elle est soumise à de nombreuses secousses et/ou d'importantes vibrations.

La courroie permet quant à elle de déplacer chacun des godets à une allure similaire pour permettre l'espacement des bulbes lors de leur entrée dans les moyens d'orientation.

Dans ce cas, chaque godet présente avantageusement deux cavités opposées l'une à l'autre, une première cavité recevant un premier bulbe lorsque le godet se déplace selon le premier sens, et une deuxième cavité recevant un second bulbe lorsque le godet se déplace selon le deuxième sens.

La présence des deux cavités opposées pour chaque godet permet de maintenir un bulbe d'une part lorsqu'il est pris dans la trémie par l'une des premières cavités et, d'autre part, lorsqu'il est transporté depuis la trémie vers le couloir des moyens d'orientation, par l'une des deuxièmes cavités.

Plus précisément, pour chaque godet, la première cavité permet de transporter un bulbe selon le premier sens de déplacement, c'est-à-dire pour le remonter depuis un fond de la trémie vers le haut de la trémie, et la deuxième cavité permet de contenir un autre bulbe lorsque les godets circulent dans le deuxième sens, à l'extérieur de la trémie, pour atteindre le couloir des moyens d'orientation.

En d'autres termes, la première cavité de chacun des godets permet de transporter un bulbe pour le sortir de la trémie, ledit bulbe coopérant ensuite avec la deuxième cavité d'un godet inférieur dans le deuxième sens de déplacement des godets.

Ainsi, dans un premier sens le godet coopère par sa première cavité avec un premier bulbe et avec un deuxième bulbe, par sa deuxième cavité, dans le deuxième sens.

Avantageusement, les moyens d'entraînement comprennent une pluralité de doigts se déplaçant entre les extrémités inférieures des parois du couloir et agissant chacun sur un bulbe, les doigts étant régulièrement espacés les uns des autres et solidaires d'une chaîne d'entraînement.

L'utilisation de doigts et leur solidarisation à la chaine d'entraînement permet une avance et un espacement constant des bulbes en vue de la plantation.

Ainsi, lorsque les bulbes sont plantés, les végétaux qu'ils donnent sont espacés selon une distance prédéterminée, cela sans intervention postérieure à la plantation.

En outre, l'utilisation de doigts permet de limiter le contact avec les bulbes, ce qui facilite alors le déplacement des bulbes dans le couloir et donc leur positionnement par friction sur les parois inclinées.

Selon un mode de réalisation avantageux, les moyens de dépose comprennent des cavaliers de réception des têtes de bulbes et, pour chaque cavalier, au moins une aiguille logée à l'intérieur dudit cavalier, chaque aiguille étant mobile entre :
- une position active dans laquelle l'aiguille fait saillie hors du cavalier,
- une position inactive dans laquelle l'aiguille est rentrée dans le cavalier.

L'utilisation d'une aiguille et d'un cavalier permet de s'assurer du maintien de la bonne orientation des bulbes préalablement à leur dépose dans les sillons de terre, tout en assurant que lors de leur préhension les bulbes ne risquent pas d'adopter une position différente.

En effet, lorsque l'aiguille est dans sa position active et qu'elle fait saillie hors du cavalier, elle est alors plantée dans le bulbe, ce qui empêche sa rotation ou son déplacement par rapport au cavalier et donc limite les risques de mauvais positionnement lors de la plantation.

De préférence, les cavaliers sont chacun solidarisés à la chaine d'entraînement des moyens d'entraînement, devant un doigt selon un sens de déplacement des doigts dans le couloir.

La solidarisation des cavaliers à la chaîne des moyens d'entraînement et leur positionnement devant un doigt selon le sens de déplacement des doigts dans le couloir permet de conserver constant l'écartement des bulbes les uns relativement aux autres lors de la plantation.

En outre, par cet espacement des bulbes, on s'assure que chaque bulbe peut adopter la position souhaitée, c'est-à-dire la tête dans l'espace entre les extrémités inférieures des parois du couloir, sans être gêné par un autre bulbe.

Selon un aspect avantageux, les moyens de dépose comprennent également un chemin de came et, pour chaque aiguille, une came solidaire de l'aiguille et coopérant avec le chemin de came pour la faire passer de sa position inactive à sa position active, ou inversement.

La coopération entre la came solidaire de chaque aiguille et le chemin de came permet de pouvoir modifier la position des aiguilles entre leur position active et leur position inactive de manière mécanique.

Ainsi, la dépose des bulbes dans les sillons s'en trouve fiabilisée puisque les risques d'une mauvaise préhension des bulbes par les moyens de dépose, notamment à cause d'une aiguille qui n'adopterait pas sa position active, sont limités contrairement à un pilotage électrique par exemple de la position des aiguilles.

Préférentiellement, les moyens de dépose comprennent également un guide positionné en regard des cavaliers, sur une portion au moins où l'aiguille passe de sa position inactive à sa position active.

La présence du guide permet de maintenir les bulbes lorsque, durant son passage à sa position active, l'aiguille vient se planter dans un bulbe. Ainsi, le bulbe reste dans sa position prédéterminée, ce qui assure une plantation efficace.

De plus, le guide permet de retenir les bulbes lorsque l'aiguille passe dans sa position active, ce qui pourrait repousser le bulbe en dehors des moyens de préhension ou des moyens de dépose.

Avantageusement, les moyens de dépose comprennent également une roue sur laquelle circule la chaîne d'entraînement des moyens d'entraînement, la roue formant le chemin de came pilotant le mouvement de chaque aiguille entre sa position inactive et sa position active.

La présence du guide permet de maintenir les bulbes lorsque, durant son passage à sa position active, l'aiguille vient se planter dans un bulbe. Ainsi, le bulbe reste dans sa position prédéterminée, ce qui assure une plantation efficace.

De plus, le guide permet de retenir les bulbes lorsque l'aiguille passe dans sa position active, ce qui pourrait repousser le bulbe en dehors des moyens de préhension ou des moyens de dépose.

De préférence, la machine comprend également des moyens de synchronisation de la vitesse des moyens d'entraînement avec une vitesse d'avancement de la machine, les moyens de synchronisation comprenant une roue crantée coopérant avec un sol sur lequel se déplace la machine, la roue crantée étant reliée aux moyens d'entraînement par des moyens de transmission.

Les moyens de synchronisation permettent de conserver une régularité d'espacement des bulbes dans les sillons en fonction de la vitesse de déplacement de la machine.

En effet, sans l'utilisation de ces moyens de synchronisation, lorsque la machine est déplacée de manière rapide, l'espacement entre deux bulbes se trouve alors allongé par rapport à un déplacement lent de la machine pour lequel l'espacement entre deux bulbes est diminué.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective arrière de dessus d'une machine selon l'invention ;
- la figure 2 est une vue en perspective avant de dessus de la machine selon l'invention ;
- la figure 3 est une vue isolée en perspective de moyens de préhension de bulbes dans une trémie de la machine, cette vue présentant deux médaillons de détails à échelle agrandie ;
- la figure 4 est une vue en perspective de dessus de moyens d'orientation et de moyens de dépose de bulbes, de la machine selon l'invention ;
- la figure 5 est une vue de côté des moyens d'orientation et des moyens de dépose de la machine selon l'invention ;
- la figure 6 est une vue en section selon le plan de coupe VI-VI de la figure 5 illustrant les moyens d'orientation de la machine selon l'invention ;
- la figure 7 est une vue de côté des moyens de dépose de la machine selon l'invention, cette vue présentant deux médaillons de détails à échelle agrandie ;
- la figure 8 est une représentation schématique des moyens de dépose selon une variante de réalisation.

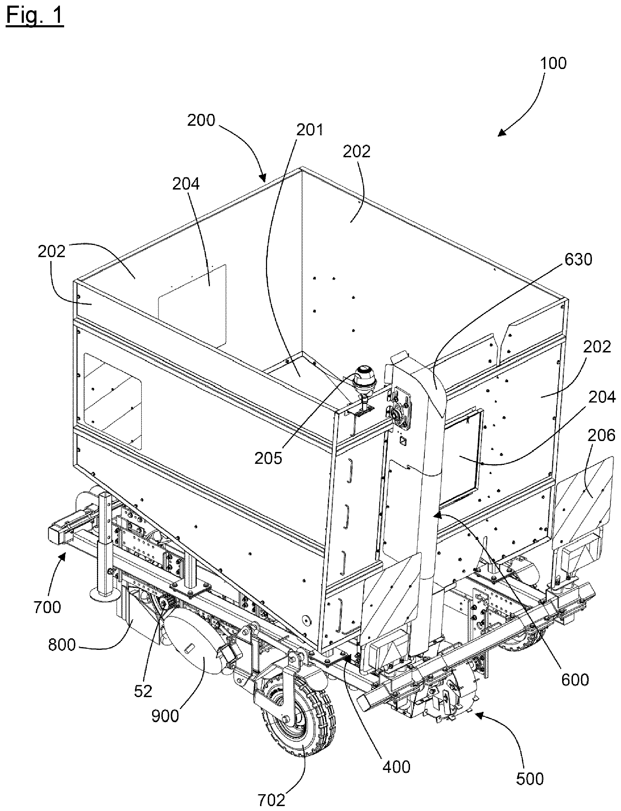

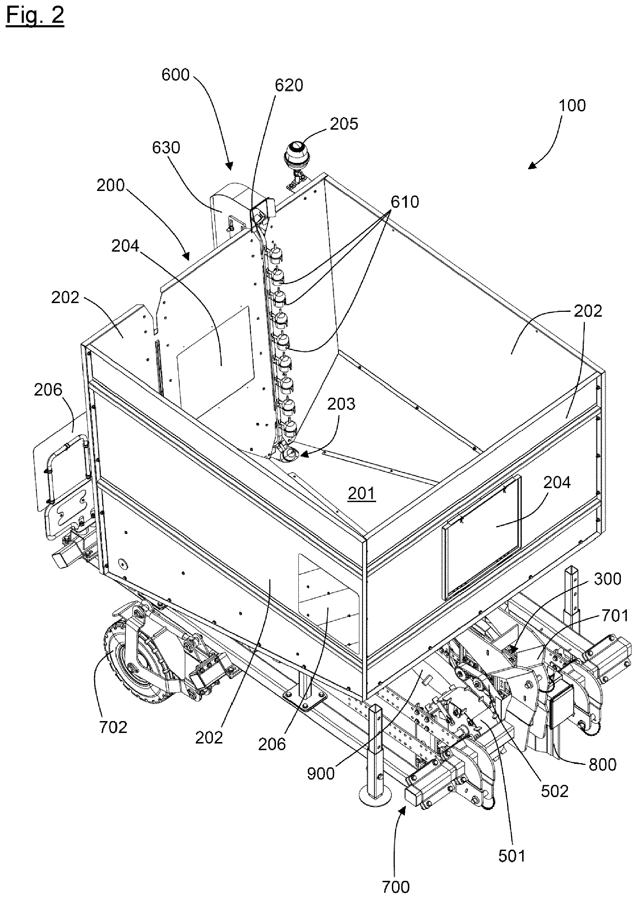

En référence aux figures 1 et 2, une machine 100 de plantation de bulbes 1 est décrite.

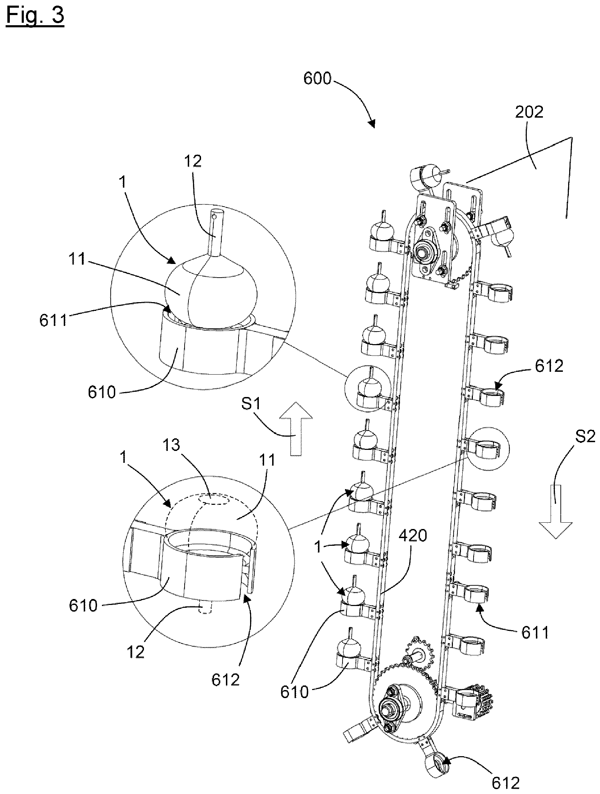

Tel qu'illustré sur les médaillons de détails de la figure 3, un bulbe 1 comprend classiquement un corps 11, une tête 12 et des racines 13 opposées à la tête 12 par rapport au corps 11.

La tête 12 peut se présenter, comme dans le cas présent d'une tige, ou de plusieurs tiges, ou simplement sous la forme d'une excroissance faisant saillie du corps 11.

La machine 100 comprend, tel qu'illustré sur les figures 1 et 2 :
- une trémie 200 ;
- des moyens de dépose 300 des bulbes 1 ;
- des moyens d'orientation 400 des bulbes 1 ;
- des moyens de synchronisation 500 ;
- des moyens de préhension 600 des bulbes 1 dans la trémie 200 ;
- un châssis 700.

En référence aux figures 1 et 2, la trémie 200 comprend :
- un fond 201 ;
- des cloisons 202 s'étendant depuis le fond 201 et formant avec ce dernier une cuve dans laquelle des bulbes 1 sont reçus en vrac.

Le fond 201 présente un orifice de sortie 203 dans lequel circulent les moyens de préhension 600 tel qu'expliqué ci-après.

L'une au moins des cloisons 202 présente une trappe 204 de visite. En l'espèce, et tel qu'illustré sur les figures 1 et 2, deux cloisons opposées présentent chacune une trappe 204 de visite.

Les trappes 204 permettent un accès direct à l'intérieur de la trémie 200 pour sa maintenance par exemple, ou pour vérifier le bon fonctionnement de la machine 100 et notamment la bonne préhension des bulbes 1 dans la trémie 200 par les moyens de préhension 600.

Selon un mode de réalisation avantageux, le fond 201 et les cloisons 202 de la trémie 200 sont réalisées dans un matériau métallique. De préférence, les cloisons 202 sont réalisées en acier.

De même, les trappes 204 sont avantageusement réalisées en acier. En variante, les trappes 204 peuvent être réalisées dans un matériau plastique transparent permettant un accès visuel à l'intérieur de la trémie 200 sans nécessiter l'ouverture des trappes 204.

En outre, la trémie 200 comprend des éléments de sécurité tels que :
- au moins un organe lumineux 205, et
- au moins un organe réflecteur 206.

Plus particulièrement, la trémie 200 comprend quatre organes réflecteurs 206 et un seul organe lumineux 205.

Les éléments de sécurité permettent de rendre plus visible encore la machine 100 lors de son utilisation, soit de manière passive par des organes réflecteurs 206, soit de manière active par l'organe lumineux 205.

Tel qu'illustré sur la figure 1 et sur la figure 2, la machine 100, et plus particulièrement la trémie 200, repose sur le châssis 700.

Le châssis 700 comprend notamment des moyens de liaison 701 à un engin agricole pour permettre la traction de la machine 100 dans un champ, c'est-à-dire sur un terrain dans lequel les bulbes 1 sont destinés à être plantés.

Le châssis 700 est également pourvu de roues 702 permettant le déplacement de la machine 100.

Selon le mode de réalisation illustré sur les figures 1 et 2, la machine 100 est donc destinée à être tractée par un engin agricole.

En variante, la machine 100 peut comprendre des moyens moteurs permettant son déplacement en toute autonomie, c'est-à-dire sans recours à un engin agricole.

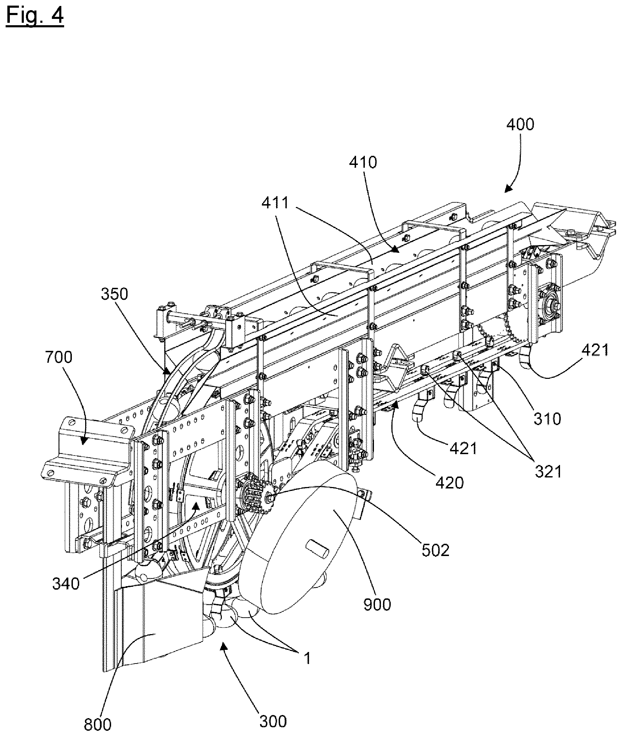

En référence aux figures 4, 5 et 6, les moyens d'orientation 400 sont à présent décrits.

Les moyens d'orientation 400 comprennent :
- un couloir 410 ;
- des moyens d'entraînement 420 des bulbes 1 dans le couloir 410.

En référence aux figures 4 e 6, le couloir 410 est bordé par deux parois 411 s'étendant sur une longueur L. La longueur L est mesurée entre l'orifice de sortie 203 de la trémie 200 et les moyens de dépose 300.

Avantageusement, la longueur L du couloir est déterminée en fonction de la dimension des bulbes 1. Notamment, la longueur L est déterminée de sorte que tous les bulbes 1, ou quasiment, atteignent leur position prédéterminée en sortie du couloir 410.

Selon un mode de réalisation illustratif et non limitatif, la longueur L est comprise entre 90 cm et 250 cm. De préférence, la longueur L du couloir est de 175 cm.

Comme expliqué ci-après, la longueur L permet de réaliser l'orientation correcte des bulbes 1 pour une plantation selon une orientation prédéfinie à partir de bulbes 1 en vrac dans la trémie 200.

En effet, les bulbes 1 étant reçus en vrac dans la trémie 200, il est nécessaire de les réorienter préalablement à leur dépose dans un sillon de terre afin d'éviter une étape de réorientation postérieure à la plantation. La réorientation peut être manuelle ou automatique et engendre engendrer un surcoût de plantation. En outre, lorsque la réorientation est manuelle, des troubles musculosquelettiques peuvent se déclarer pour les agriculteurs.

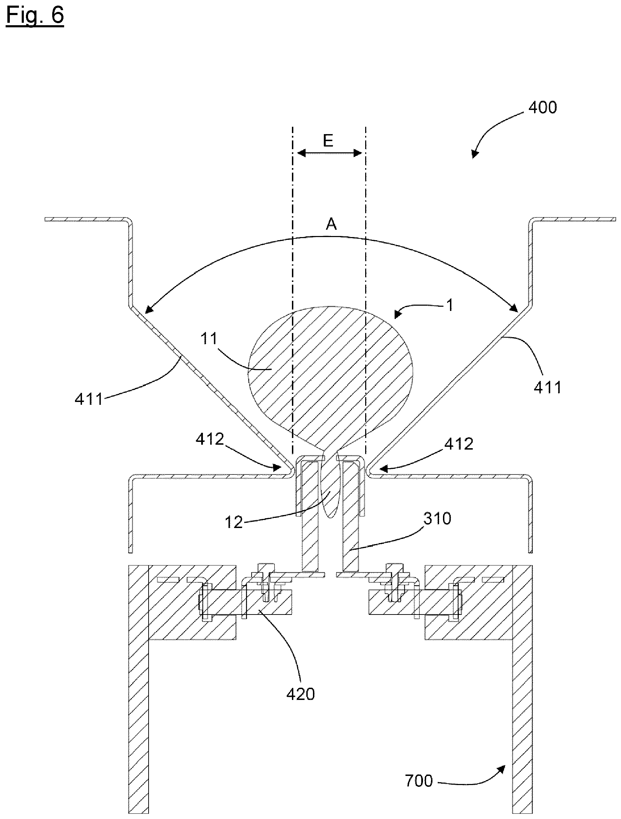

En référence à la figure 6, les parois 411 sont inclinées l'une par rapport à l'autre et forment entre elles un angle A.

L'angle A est avantageusement compris entre 30° et 150°. De préférence l'angle A est de 90°.

Cette plage d'angle A d'inclinaison des deux parois 411 l'une par rapport à l'autre permet de pouvoir guider les bulbes 1 pour assurer leur orientation comme expliqué ci-après.

L'angle A peut ainsi être adapté à différents bulbes 1. Plus précisément, en fonction de la taille des bulbes, la valeur de l'angle A d'inclinaison des parois 411 peut être modifié de sorte à garantir la friction des bulbes 1 sur les parois 411.

Tel que cela est représenté sur la figure 6, les parois 411 présentent chacune une extrémité inférieure 412.

Les extrémités inférieures 412 définissent entre elles un espace E de réception de la tête 12 des bulbes 1 durant leur déplacement dans le couloir 410.

Les bulbes 1 sont déplacés dans le couloir grâce aux moyens d'entraînement 420.

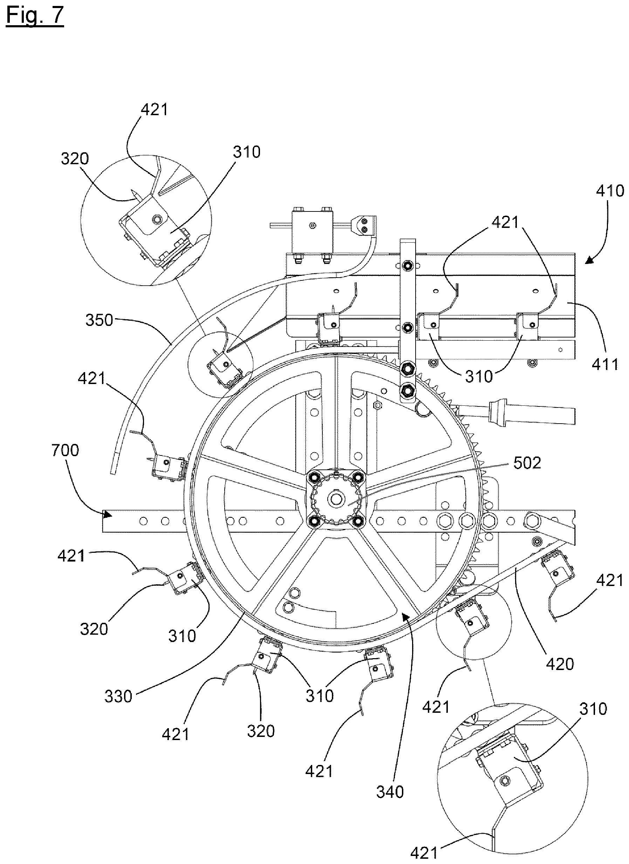

En référence à la figure 7, les moyens d'entraînement 420 comprennent :
- une pluralité de doigts 421, et
- une chaîne d'entraînement 422.

Bien entendu, la chaîne d'entrainement 422 pourrait être remplacée par tout autre moyen d'entraînement, par exemple une courroie, sans modifier le principe de l'invention.

Les doigts 421 se déplacent entre les extrémités inférieures 412 des parois 411 du couloir 410, chaque doigt 421 agissant sur un bulbe 1.

Les doigts 421 sont régulièrement espacés les uns des autres et solidaires de la chaîne d'entraînement 422.

Tel qu'illustré sur les figures 4, 5 et 7, les doigts 421 sont courbés.

Plus particulièrement, les doigts 421 sont formés d'une lamelle d'acier qui est travaillée et, en l'espèce pliée, pour lui conférer sa forme courbée.

Les doigts 421 permettent, tel qu'expliqué ci-après, de faire circuler les bulbes 1 dans le couloir 410 depuis la trémie 200 jusqu'aux moyens de dépose 300.

Les moyens de dépose 300 permettent de déposer les bulbes 1 selon un écartement régulier dans un sillon de terre.

En référence à la figure 7, les moyens de dépose 300 comprennent :
- des cavaliers 310 de réception des têtes 12 de bulbes 1 ;
- pour chaque cavalier 310, au moins une aiguille 320, logée à l'intérieur dudit cavalier 310, et mobile par rapport à celui-ci ;
- un chemin de cames 330.

Les cavaliers 310 sont solidaires de la chaîne d'entraînement 422 des moyens d'entraînement 420.

En outre, chaque cavalier 310 est également solidaire de l'un des doigts 421. Plus précisément, les cavaliers 310 sont positionnés chacun devant un doigt 421 selon le sens de déplacement des doigts 421 dans le couloir 410.

Avantageusement, deux aiguilles 320 sont utilisées pour chaque cavalier 310. L'utilisation de deux aiguilles 320 pour chaque cavalier 310 permet de prévenir d'une rotation des bulbes 1 lorsqu'ils sont saisis par les moyens de préhension 300. Ainsi, l'orientation identique de tous les bulbes 1 dans les sillons de terre est garantie, ou quasiment.

Les aiguilles 320 sont mobiles par rapport au cavalier 310 dans lequel elles sont montées entre :
- une position active dans laquelle l'aiguille 320 fait saillie hors du cavalier 310,
- une position inactive dans laquelle l'aiguille 320 est rentrée dans le cavalier 310.

Chaque aiguille 320 est solidaire d'une came qui coopère avec le chemin de cames 330 pour permettre le déplacement de l'aiguille 320 de sa position inactive à sa position active ou inversement.

Des moyens de rappel élastique peuvent également être prévus, solidaires des aiguilles 320 pour les repousser dans leur position inactive. Ainsi, lorsque les cames ne sont plus au contact du chemin de cames 330, les aiguilles sont repoussées vers leur position inactive, ce qui permet de libérer le bulbe 1.

Le chemin de cames 330 est avantageusement porté par une roue 340 montée sur le châssis 700 à une extrémité du couloir 410 opposée à la sortie 203 de la trémie 200.

La roue 340 présente une pluralité de dents permettant de coopérer par engrenage avec la chaîne 422 des moyens d'entraînement. Ainsi, par sa rotation, la roue 340 entraîne la chaîne d'entraînement 422 et donc les doigts 421 ainsi que les cavaliers 310.

L'entraînement des doigts provoque, comme expliqué précédemment, le déplacement des bulbes 1 à l'intérieur du couloir 410.

Comme évoqué précédemment, lorsque les cavaliers, 310, portés par la chaîne d'entraînement 422, atteignent la roue 340, les cames solidaires des aiguilles 320 viennent en coopération avec le chemin de cames 330 et passent de leur position inactive à leur position active.

Durant leur passage de la position inactive à la position active, les aiguilles 320 viennent se planter dans un bulbe 1 qui est déplacé par le doigt 421 associé aux cavalier 310.

Pour assurer que l'aiguille se plante dans un bulbe 1, les moyens de dépose comprennent également un guide 350 positionné en regard des cavaliers 310.

Plus précisément, et tel que cela est visible sur la figure 7, le guide 350 est courbé et s'étend autour de la roue 340.

A tout le moins, le guide 350 est positionné en regard des cavaliers 310 sur une portion au moins où les aiguilles 320 passent de leur position inactive à leur position active.

Cela permet de pouvoir coincer les bulbes 1 entre les cavaliers 310 et le guide 350, de sorte que le bulbe 1 ne soit pas éjecté hors des moyens de préhension 300 lorsque les aiguilles 320 passent de leur position inactive à leur position active et se plantent dans le bulbe 1.

Tel qu'on le voit sur la figure 4, le guide 350 est formé d'un fil d'acier ou d'une tige d'acier pliée en boucle et arquée de sorte que chaque portion de la boucle s'étende autour de la roue 340.

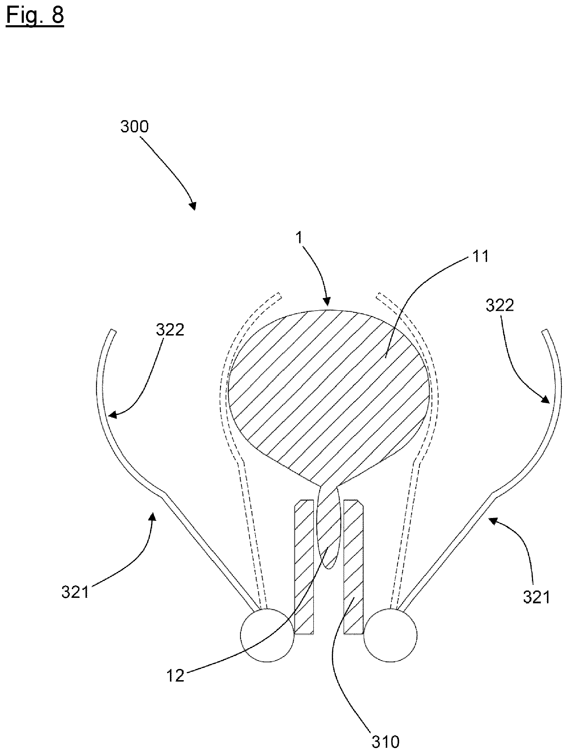

Selon une variante de réalisation illustrée sur la figure 8, les moyens de dépose 300 comprennent pour chaque cavalier 310, en lieu et place des aiguilles 320, une paire de mors 321.

Les mors 321 sont montés mobiles sur les cavaliers 310 entre :
- une position de serrage, dans laquelle les mors 321 sont rapprochés l'un de l'autre pour maintenir en position un bulbe 1, et
- une position lâche, dans laquelle les mors 321 sont écartés l'un de l'autre.

Sur la figure 8, la position de serrage est illustrée par les traits pointillés tandis que la position lâche est illustrée par les traits continus.

Les mors 321 comprennent avantageusement une forme creusée 322 qui reçoit le corps 11 des bulbes 1 dans la position de serrage.

Une autre variante non illustrée peut consister en une version hybride des moyens de dépose 300. Dans cette variante hybride, les moyens de dépose comprennent, pour chaque cavalier 310, à la fois des aiguilles 320 et des mors 321.

Pour alimenter les moyens d'orientation 400 en bulbes 1 depuis la trémie 200, les moyens de préhension 600, illustrés sur la figure 3 notamment, sont à présent décrits.

Les moyens de préhension 600 comprennent :
- une pluralité de godets 610 ;
- une courroie 620 à laquelle sont fixés les godets 610 ;
- une goulotte 630 dans laquelle circule la courroie 620.

La goulotte 630 s'étend le long de l'une des cloisons 200 tel qu'illustré sur la figure 1.

En référence à la figure 3, chaque godet 610 présente une première cavité 611 et une deuxième cavité 612 opposée à la première cavité 611.

Les godets 610 circulent le long d'une cloison 202 de la trémie 200 pour remonter les bulbes 1 depuis le fond 201 de la trémie 200 et les amener dans la goulotte 630.

Les godets 610 circulent ainsi dans la trémie 200 selon un premier sens S1 en saisissant chacun un bulbe 1 depuis l'orifice de sortie 203 puis, hors de la trémie 200, selon un second sens S2 opposé au premier sens.

Tel qu'illustré sur la figure 3, selon le premier sens S1, chaque godet 610 recueille un bulbe 1 dans sa première cavité 611 puis, lorsqu'il atteint le haut de la trémie 200, et donc l'entrée de la goulotte 630, le bulbe 1 tombe hors de la première cavité 611 pour atterrir dans la deuxième cavité 612 d'un godet 610 précédent, selon le sens de circulation des godets 610.

En d'autres termes, le bulbe 1 quitte la première cavité 611 d'un godet 610 pour atteindre la deuxième cavité 612 d'un autre godet 610 positionné en dessous selon le sens ou le deuxième sens S2 de déplacement des godets 610 dans la goulotte 630.

Lorsque les godets 610 atteignent une extrémité basse de la goulotte 630, ils repassent alors en circulation selon le premier sens S1 pour arriver à l'orifice de sortie 203 de la trémie 200 et ainsi réceptionner dans leur première cavité 611 un nouveau bulbe 1. Le bulbe 1 qui était alors retenu dans la deuxième cavité 612 tombe par gravité dans le couloir 410.

Tel qu'on le voit sur les figures 2 et 3, la courroie 620 s'étend à cheval entre l'intérieur et l'extérieur de la trémie 200.

Plus particulièrement, selon le premier sens S1, la courroie 620 s'étend à l'intérieur de la trémie 200, et selon le deuxième sens S2, la courroie 620 s'étend à l'extérieur de la trémie 200 et plus précisément dans la goulotte 630.

Bien entendu, la courroie 620 pourrait être remplacée par tout autre moyen d'entraînement, par exemple une chaîne, sans modifier le principe de l'invention.

Pour assurer un espacement constant entre les bulbes 1 lors de la plantation, les moyens de synchronisation 500 agissent à la fois sur les moyens de préhension 600, les moyens d'orientation 400 et les moyens de dépose 300.

Plus particulièrement, et en référence aux figures 1, 2, 3, et 4, les moyens de synchronisation 500 comprennent :
- au moins une roue crantée (figures 1 et 2) ;
- des moyens de transmission 502 (figures 3 et 4).

La roue crantée 501 est montée en rotation sur le châssis 700 et coopère avec le sol sur lequel la machine 100 circule.

En fonction de la vitesse d'avancée de la machine 100 sur le sol, la roue crantée 501, via les moyens de transmission 502, entraîne à la fois les moyens de préhension 600, les moyens d'orientation 400 et les moyens de dépose 300.

Plus précisément, les moyens de transmission 502 agissent directement sur la courroie 620 des moyens de préhension 600 et sur la chaîne 422 des moyens d'entraînement, la chaîne 422 étant couplée aux cavaliers 310 des moyens de dépose 300 et aux doigts 421 des moyens d'orientation 400, tel que décrit précédemment.

Ainsi, en fonction de la vitesse de déplacement de la machine 100 sur le sol, la vitesse des moyens de préhension 600 et la vitesse de la chaîne d'entraînement 422 sont adaptées.

Ainsi, l'espacement des bulbes 1 lors de la plantation reste constant, indépendamment de la vitesse à laquelle circule la machine 100 sur le sol.

En référence à la figure 4, la machine 100 comprend également un sillonneur 800 et un outil de rebouchage des sillons 900.

Le sillonneur 800 est positionné en amont des moyens de dépose 300 selon un sens de déplacement de la machine 100. Plus précisément, le sillonneur 800 est positionné à une extrémité du couloir 410 opposé à la sortie 203 de la trémie 200.

Autrement dit, le sillonneur 800 est positionné de telle sorte qu'il crée dans le sol de plantation un sillon permettant aux moyens de dépose 300 de déposer les bulbes 1 convenablement orientés dans le sillon qui vient d'être créé.

L'outil de rebouchage 900 est quant à lui positionné en aval des moyens de dépose 300 selon le sens de déplacement de la machine 100.

Tel qu'illustré sur la figure 4, l'outil de rebouchage 900 est positionné sous le couloir 410 entre les moyens de dépose 300 et l'orifice de sortie 203 de la trémie 200.

Ainsi, comme expliqué ci-après, la machine 100 permet de créer un sillon dans un sol de plantation grâce au sillonneur 800, puis de déposer un bulbe 1 dans le sillon par les moyens de dépose 300, avant que le sillon ne soit rebouché par l'outil de rebouchage 900.

Les moyens de dépose 300 et les moyens d'orientation 400 forment ensemble une ligne de plantation.

Eventuellement, la ligne de plantation peut également inclure les moyens de préhension 600, le sillonneur 800 et/ou l'outil de rebouchage 900.

Selon le mode de réalisation illustré sur les figures 1 et 2, la machine 100 comprend une unique ligne de plantation.

En variante non illustrée, la machine 100 peut comprendre au moins deux lignes de plantation parallèles les unes aux autres.

En fonctionnement, la plantation de bulbes 1 au moyen de la machine 100 de plantation selon l'invention se fait comme suit.

Dans une première étape, un ouvrier agricole remplit la trémie 200 de bulbes 1 en vrac.

La machine 100 est alors entraînée sur un sol de plantation pour y semer les bulbes 1 dans une orientation prédéterminée.

Pour cela, les roues crantées 501 des moyens de synchronisation 500 sont posées sur le sol pour permettre l'entraînement le chaque ligne de plantation.

Cela signifie que le sillonneur 800 est planté dans le sol afin de pouvoir créer un sillon dans le sol en fonction de l'avancée de la machine 100.

Lorsque la machine est déplacée, le sillonneur 800 crée un sillon et les roues crantées 501 des moyens de synchronisation 500 agissent à la fois sur les moyens de préhension 600, sur les moyens d'orientation 400 et les moyens de dépose 300 via les moyens de transmission 502.

Les godets 610 saisissent alors les bulbes 1 (en vrac dans la trémie 200) pour alimenter les moyens d'orientation 400.

Les doigts 421 entraînés par la chaîne d'entraînement 422 circulent dans l'espace E du couloir 410 entraînant les bulbes 1 avec eux.

Lorsqu'un bulbe 1 est entraîné par un doigt 421, il glisse contre les parois 411 du couloir 410 et s'oriente la tête 12 vers le bas, c'est-à-dire vers le sol de plantation, par frottement sur les parois 411.

Lorsqu'il est tête 12 en bas, le bulbe 1 voit sa tête 12 logée dans un cavalier 310 et est entraîné jusqu'aux moyens de dépose 300 dans cette position.

Les moyens de dépose 300 permettent un retournement des bulbes 1 pour les positionner tête en l'air lorsqu'ils sont, in fine, dans le sillon de terre.

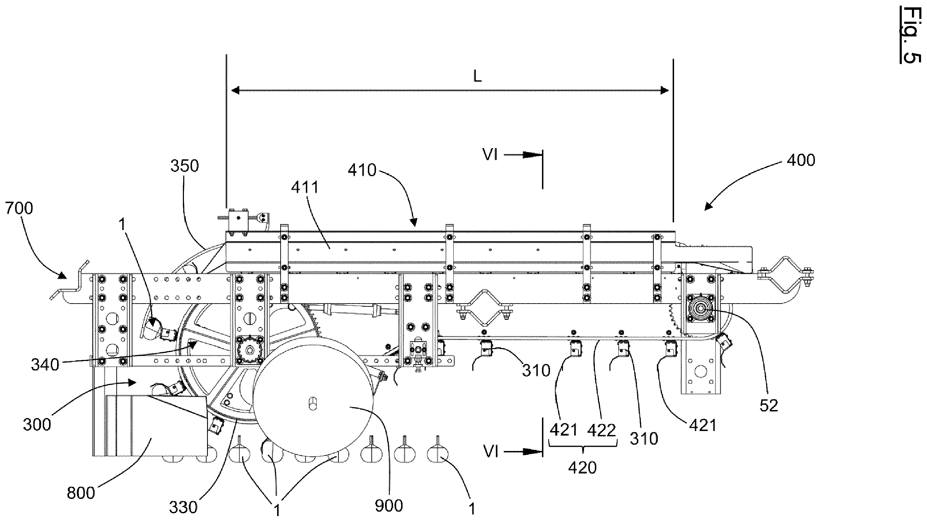

Plus particulièrement, et comme cela est illustré sur les figures 4 et 5, les bulbes sont retournés à 180° entre leur position dans le couloir 410 et leur position dans le sillon de terre.

Ce retournement est notamment obtenu par l'insertion des aiguilles 320 dans la tête 12 du bulbe 1 puis par le suivi de la roue 340 par la chaîne d'entraînement 422 jusqu'à ce que les aiguilles 320 adoptent leur position inactive et se séparent ainsi du bulbe 1, laissant celui-ci tomber par gravité dans le sillon de terre en étant convenablement orienté, c'est-à-dire en ayant sa tête 12 orientée vers le ciel.

La machine 100 qui vient d'être décrite permet de planter des bulbes 1 dans une position prédéterminée, notamment tête 12 en l'air sans nécessiter d'opération de retournement post-plantation.

En d'autres termes, lorsque les bulbes 1 ont quitté la machine 100, ils sont convenablement orientés, si bien que, hormis pour un contrôle visuel, il n'est pas nécessaire, ou quasiment, à un opérateur de procéder à une étape de réorientation manuelle des bulbes 1 dans les sillons de terre.

Ainsi, la pénibilité de la plantation et notamment des étapes post-plantation pour les ouvriers agricoles est réduite, voire supprimée.

En outre, les coûts de plantation sont également réduits par rapport aux techniques existantes puisque la plantation peut être entièrement automatisée et accélérée, contrairement aux techniques connues dans lesquelles soit une étape de réorientation post-plantation est nécessaire, soit un pré-positionnement des bulbes dans la machine est nécessaire préalablement à leur dépose dans les sillons de terre. Un tel pré-positionnement réduit en effet la vitesse de plantation à la vitesse d'action des opérateurs et augmente considérablement le coût de la plantation puisqu'il nécessite un nombre d'opérateurs plus important pour garantir des cadences élevées de plantation.

## Revendications

1. Machine (100) de plantation de bulbes (1), chaque bulbe (1) ayant une tête (12), la machine (100) comprenant :
- une trémie (200) de réception de bulbes (1) en vrac, la trémie (200) ayant un orifice de sortie (203) des bulbes (1), et
- des moyens de dépose (300) des bulbes (1) dans un sillon de terre,
la machine (100) comprenant également des moyens d'orientation (400) des bulbes (1), les moyens d'orientation (400) des bulbes (1) comprenant :
- un couloir (410), s'étendant entre l'orifice de sortie (203) et les moyens de dépose (300), et
- des moyens d'entraînement (420) des bulbes (1) le long du couloir (410),
le couloir (410) étant bordé de deux parois (411) inclinées l'une par rapport à l'autre et présentant chacune une extrémité inférieure (412), les extrémités inférieures (412) des parois (411) définissant entre elles un espace (E) de réception de la tête (12) des bulbes (1),
**caractérisée en ce qu'**elle comprend également des moyens de préhension (600) intercalés entre la trémie (200) et les moyens d'orientation (400), les moyens de préhension (600) comprenant :
- une pluralité de godets (610) ;
- une courroie (620) à laquelle sont fixés les godets (610) ;
- une goulotte (630) dans laquelle circule la courroie (620), la goulotte (630) s'étendant le long d'une cloison (202) de la trémie (200),
les godets (610) circulant, dans la trémie (200) selon un premier sens (S1) en saisissant chacun un bulbe (1) depuis l'orifice de sortie (203), puis hors de la trémie (200) selon un second sens (S2) opposé au premier sens (S1).

2. Machine (100) selon la revendication précédente, **caractérisée en ce que** les moyens d'entraînement (420) comprennent une pluralité de doigts (421) se déplaçant entre les extrémités inférieures (412) des parois (411) du couloir (410) et agissant chacun sur un bulbe (1), les doigts (421) étant régulièrement espacés les uns des autres et solidaires d'une chaîne d'entraînement (422).

3. Machine (100) selon la revendication 1 ou 2, **caractérisée en ce que** les moyens de dépose (300) comprennent des cavaliers (310) de réception des têtes (12) de bulbes (1) et, pour chaque cavalier (310), au moins une aiguille (320) logée à l'intérieur dudit cavalier (310), chaque aiguille (320) étant mobile entre :
- une position active dans laquelle l'aiguille (320) fait saillie hors du cavalier (310),
- une position inactive dans laquelle l'aiguille (320) est rentrée dans le cavalier (310).

4. Machine (100) selon les revendications 2 et 3, **caractérisée en ce que** les cavaliers (310) sont chacun solidarisés à la chaine d'entraînement (422) des moyens d'entraînement (420), devant un doigt (421) selon un sens de déplacement des doigts (321) dans le couloir (410).

5. Machine (100) selon la revendication précédente, **caractérisée en ce que** les moyens de dépose (300) comprennent également un chemin de came (330) et, pour chaque aiguille (320), une came solidaire de l'aiguille (320) et coopérant avec le chemin de came (330) pour la faire passer de sa position inactive à sa position active, ou inversement.

6. Machine (100) selon l'une des revendications 3 à 5, **caractérisée en ce que** les moyens de dépose (300) comprennent également un guide (350) positionné en regard des cavaliers (310), sur une portion au moins où l'aiguille (320) passe de sa position inactive à sa position active.

7. Machine (100) selon la revendication 5 ou les revendications 5 et 6, **caractérisée en ce que** les moyens de dépose (300) comprennent également une roue (340) sur laquelle circule la chaîne d'entraînement (422) des moyens d'entraînement (420), la roue (340) formant le chemin de came (330) pilotant le mouvement de chaque aiguille (100) entre sa position inactive et sa position active.

8. Machine (100) selon l'une quelconque des revendications précédentes, **caractérisée en ce que** chaque godet (610) présente deux cavités (611, 612) opposées l'une à l'autre, une première cavité (611) recevant un premier bulbe (1) lorsque le godet (610) se déplace selon le premier sens (S1), et une deuxième cavité (612) recevant un second bulbe (1) lorsque le godet (610) se déplace selon le deuxième sens (S2).

9. Machine (100) selon l'une quelconque des revendications précédentes, **caractérisé en ce qu'**elle comprend également des moyens de synchronisation (500) de la vitesse des moyens d'entraînement (420) avec une vitesse d'avancement de la machine (100), les moyens de synchronisation (500) comprenant une roue crantée (501) coopérant avec un sol sur lequel se déplace la machine (100), la roue crantée (501) étant reliée aux moyens d'entraînement (420) par des moyens de transmission (502).

## Patentansprüche

1. Maschine (100) zum Pflanzen von Zwiebeln (1), wobei jede Zwiebel (1) einen Kopf (12) aufweist, die Maschine (100) umfassend:
- einen Trichter (200) zur Aufnahme von losen Zwiebeln (1), wobei der Trichter (200) eine Auslassöffnung (203) für die Zwiebeln (1) aufweist, und
- Mittel zum Ablegen (300) der Zwiebeln (1) in einer Erdfurche, wobei die Maschine (100) auch Mittel zum Ausrichten (400) der Zwiebeln (1) umfasst, die Mittel zum Ausrichten (400) der Zwiebeln (1) umfassend:
- einen Korridor (410), der sich zwischen der Auslassöffnung (203) und den Mitteln zum Ablegen (300) erstreckt, und
- Mittel zum Transportieren (420) der Zwiebeln (1) entlang des Korridors (410), wobei der Korridor (410) von zwei Wänden (411) begrenzt wird, die zueinander geneigt sind und jeweils ein unteres Ende (412) aufweisen, wobei die unteren Enden (412) der Wände (411) zwischen sich einen Raum (E) zur Aufnahme des Kopfes (12) der Zwiebeln (1) definieren, **dadurch gekennzeichnet, dass** sie auch Mittel zum Greifen (600) umfasst, die zwischen dem Trichter (200) und den Mitteln zum Ausrichten (400) eingefügt sind, die Mittel zum Greifen (600) umfassend:
- eine Vielzahl von Schaufeln (610);
- einen Riemen (620), an dem die Schaufeln (610) befestigt sind;
- eine Rutsche (630), in der der Riemen (620) läuft, wobei sich die Rutsche (630) entlang einer Trennwand (202) des Trichters (200) erstreckt, wobei die Schaufeln (610) in dem Trichter (200) in einer ersten Richtung (S1) laufen, wobei jede eine Zwiebel (1) von der Austrittsöffnung (203) aus ergreift, und dann aus dem Trichter (200) in einer zweiten Richtung (S2), die der ersten Richtung (S1) entgegengesetzt ist, laufen.

2. Maschine (100) nach dem vorstehenden Anspruch, **dadurch gekennzeichnet, dass** die Mittel zum Transportieren (420) eine Vielzahl von Fingern (421) umfassen, die sich zwischen den unteren Enden (412) der Wände (411) des Korridors (410) bewegen und jeweils auf eine Zwiebel (1) wirken, wobei die Finger (421) regelmäßig voneinander beabstandet und mit einer Transportkette (422) fest verbunden sind.

3. Maschine (100) nach Anspruch 1 oder 2, **dadurch gekennzeichnet, dass** die Mittel zum Ablegen (300) Reiter (310) zur Aufnahme der Köpfe (12) von Zwiebeln (1) umfassen und für jeden Reiter (310) mindestens eine Nadel (320), die im Inneren des Reiter (310) untergebracht ist, wobei jede Nadel (320) beweglich ist zwischen:
- einer aktiven Position, wobei die Nadel (320) aus dem Reiter (310) herausragt,
- einer inaktiven Position, wobei die Nadel (320) in den Reiter (310) eingezogen ist.

4. Maschine (100) nach Anspruch 2 und 3, **dadurch gekennzeichnet, dass** die Reiter (310) jeweils mit der Transportkette (422) der Mittel zum Transportieren (420) vor einem Finger (421) in einer Bewegungsrichtung der Finger (321) in dem Korridor (410) fest verbunden sind.

5. Maschine (100) nach dem vorstehenden Anspruch, **dadurch gekennzeichnet, dass** die Mittel zum Ablegen (300) auch eine Nockenbahn (330) und für jede Nadel (320) einen Nocken umfassen, der fest mit der Nadel (320) verbunden ist und mit der Nockenbahn (330) zusammenwirkt, um sie von ihrer inaktiven Position in ihre aktive Position zu bringen oder umgekehrt.

6. Maschine (100) nach einem der Ansprüche 3 bis 5, **dadurch gekennzeichnet, dass** die Mittel zum Ablegen (300) auch eine Führung (350) umfassen, die gegenüber den Reitern (310) auf mindestens einem Abschnitt positioniert ist, wo die Nadel (320) von ihrer inaktiven Position zu ihrer aktiven Position übergeht.

7. Maschine (100) nach Anspruch 5 oder den Ansprüchen 5 und 6, **dadurch gekennzeichnet, dass** die Mittel zum Ablegen (300) auch ein Rad (340) umfassen, auf dem die Transportkette (422) der Mittel zum Transportieren (420) läuft, wobei das Rad (340) die Nockenbahn (330) bildet, die die Bewegung jeder Nadel (100) zwischen ihrer inaktiven Position und ihrer aktiven Position steuert.

8. Maschine (100) nach einem der vorstehenden Ansprüche, **dadurch gekennzeichnet, dass** jede Schaufel (610) zwei einander gegenüberliegende Hohlräume (611, 612) aufweist, wobei ein erster Hohlraum (611) eine erste Zwiebel (1) aufnimmt, wenn sich die Schaufel (610) in die erste Richtung (S1) bewegt, und ein zweiter Hohlraum (612) eine zweite Zwiebel (1) aufnimmt, wenn sich die Schaufel (610) in die zweite Richtung (S2) bewegt.

9. Maschine (100) nach einem der vorstehenden Ansprüche, **dadurch gekennzeichnet, dass** sie auch Mittel zur Synchronisation (500) der Geschwindigkeit der Mittel zum Transportieren (420) mit einer Vorschubgeschwindigkeit der Maschine (100) umfasst, wobei die Mittel zum Synchronisieren (500) ein Zahnrad (501) umfassen, das mit einem Boden zusammenwirkt, auf dem sich die Maschine (100) bewegt, wobei das Zahnrad (501) mit den Mitteln zum Transportieren (420) über Übertragungsmittel (502) verbunden ist.

## Claims

1. A machine (100) for planting bulbs (1), each bulb (1) having a head (12), the machine (100) comprising:
- a hopper (200) for receiving bulbs (1) in bulk, the hopper (200) having an outlet orifice (203) for the bulbs (1), and
- means for depositing (300) the bulbs (1) in a furrow of soil, the machine (100) also comprising means for orienting (400) the bulbs (1), the means for orienting (400) the bulbs (1) comprising:
- a corridor (410), extending between the outlet orifice (203) and the depositing means (300), and
- means for driving (420) the bulbs (1) along the corridor (410), the corridor (410) being bordered by two walls (411) which are inclined relative to each other and each having a lower end (412), the lower ends (412) of the walls (411) defining therebetween a space (E) for receiving the head (12) of the bulbs (1),
**characterised in that** it also comprises gripping means (600) interposed between the hopper (200) and the orientation means (400), the gripping means (600) comprising:
- a plurality of buckets (610)
- a belt (620) to which the buckets (610) are fastened
- a chute (630) in which the belt (620) circulates, the chute (630) extending along a partition (202) of the hopper (200),
the buckets (610) circulating, in the hopper (200) in a first direction (S1) by each grasping a bulb (1) from the outlet orifice (203), then out of the hopper (200) in a second direction (S2) opposite to the first direction (S1).

2. The machine (100) according to the preceding claim, **characterised in that** the drive means (420) comprise a plurality of fingers (421) being displaced between the lower ends (412) of the walls (411) of the corridor (410) and each acting on a bulb (1), the fingers (421) being regularly spaced from each other and secured to a drive chain (422).

3. The machine (100) according to claim 1 or 2, **characterised in that** the depositing means (300) comprise jumpers (310) for receiving the heads (12) of bulbs (1) and, for each jumper (310), at least one needle (320) housed inside said jumper (310), each needle (320) being movable between:
- an active position in which the needle (320) protrudes from the jumper (310),
- an inactive position in which the needle (320) is retracted into the jumper (310).

4. The machine (100) according to claims 2 and 3, **characterised in that** the jumpers (310) are each secured to the drive chain (422) of the drive means (420), in front of a finger (421) in a direction of displacement of the fingers (321) in the corridor (410).

5. The machine (100) according to the preceding claim, **characterised in that** the depositing means (300) also comprise a cam path (330) and, for each needle (320), a cam secured to the needle (320) and cooperating with the cam path (330) to move it from its inactive position to its active position, or vice versa.

6. The machine (100) according to one of claims 3 to 5, **characterised in that** the depositing means (300) also comprise a guide (350) positioned opposite the jumpers (310), on at least one portion where the needle (320) passes from its inactive position to its active position.

7. The machine (100) according to claim 5 or claims 5 and 6, **characterised in that** the depositing means (300) also comprise a wheel (340) on which the drive chain (422) of the drive means (420) circulates, the wheel (340) forming the cam path (330) controlling the movement of each needle (100) between its inactive position and its active position.

8. The machine (100) according to any one of the preceding claims, **characterised in that** each bucket (610) has two cavities (611, 612) which are opposite to each other, a first cavity (611) receiving a first bulb (1) when the bucket (610) is displaced in the first direction (S1), and a second cavity (612) receiving a second bulb (1) when the bucket (610) is displaced in the second direction (S2).

9. The machine (100) according to any one of the preceding claims, **characterised in that** it also comprises means (500) for synchronising the speed of the drive means (420) with an advance speed of the machine (100), the synchronising means (500) comprising a notched wheel (501) cooperating with a ground on which the machine (100) is displaced, the notched wheel (501) being connected to the drive means (420) by transmission means (502).
